# FASCICULE DE BREVET EUROPEEN

(11) **EP 0 733 347 B1**
(45) Date de publication et mention de la délivrance du brevet: **05.07.2000**
(21) Numéro de dépôt: 95106691.9
(22) Date de dépôt: 04.05.1995
(51) Int. Cl.: A61C 5/02

(54) **Jeu d'instruments pour l'alésage des canaux radiculaires**
Instrumentenset für die Aufweitung von Zahnwurzelkanälen
Set of instruments for preparing root canals

(30) Priorité: 24.03.1995 CH 85195
(43) Date de publication de la demande: 25.09.1996
(73) Titulaire: MAILLEFER INSTRUMENTS S.A., CH-1338 Ballaigues (CH)
(72) Inventeur: Aeby, François, CH-1442 Montagny-près-Yverdon (CH)
(74) Mandataire: Micheli & Cie

(56) Documents cités:
- EP-A- 0 501 255
- CH-A- 86 648

## Description

La présente invention a pour objet un jeu d'instruments pour l'alésage des canaux radiculaires dentaires, de diamètres différents, comprenant chacun une tige conique présentant au moins une lèvre hélicoïdale coupante.

De tels jeux d'instruments, constitués par des broches et limes, sont connus en soi.

Ils permettent au praticien qui procède à l'alésage d'un canal radiculaire dentaire d'utiliser les instruments du jeu en commençant par un instrument de petit diamètre et d'utiliser ensuite, successivement, les instruments de diamètre croissant jusqu'à ce que toute la pulpe infectée soit éliminée et que le canal alésé ait une forme convenant à son obturation au moyen de gutta-percha ou de ciment.

Etant donné que ces instruments sont de diamètres différents, le moment de flexion de chacun d'eux varie d'un instrument à l'autre. Dans les jeux d'instruments connus, cette variation du moment de flexion suit une courbe exponentielle de sorte que les instruments de petit diamètre sont très ou trop flexibles alors que les instruments de gros diamètre sont trop rigides. Or, lorsque l'instrument est trop flexible, il risque de se plier avant même que le praticien ait trouvé l'ouverture du canal alors que, lorsque l'instrument est trop rigide, il ne suit que difficilement la courbure du canal dentaire.

Le but de la présente invention est de remédier à cet inconvénient en fournissant un jeu d'instruments dont les instruments de petit diamètre soient flexibles sans exagération et dont les instruments de gros diamètre ne soient pas exagérément rigides.

Ce but est atteint grâce aux moyens définis dans la revendication 1.

Le dessin représente, à titre d'exemple, une forme d'exécution de l'objet de l'invention et une variante.

La fig. 1 est une vue en élévation d'un instrument pour l'alésage des canaux radiculaires dentaires.

Les figs. 2, 3 et 4 sont des sections droites, à une échelle plus grande que celle de la fig. 1, de trois instruments d'un jeu d'instruments tels que celui de la fig. 1.

La fig. 5 est un diagramme des moments de flexion des instruments d'un tel jeu en fonction de leur diamètre, diagramme sur lequel ont également été portés les moments de flexion des instruments d'un jeu connu, de l'état de la technique, et

Les figs. 6, 7 et 8 sont des sections droites, analogues à celles des figs. 2 à 4, de trois instruments d'une variante de jeu d'instruments pour l'alésage des canaux radiculaires dentaires.

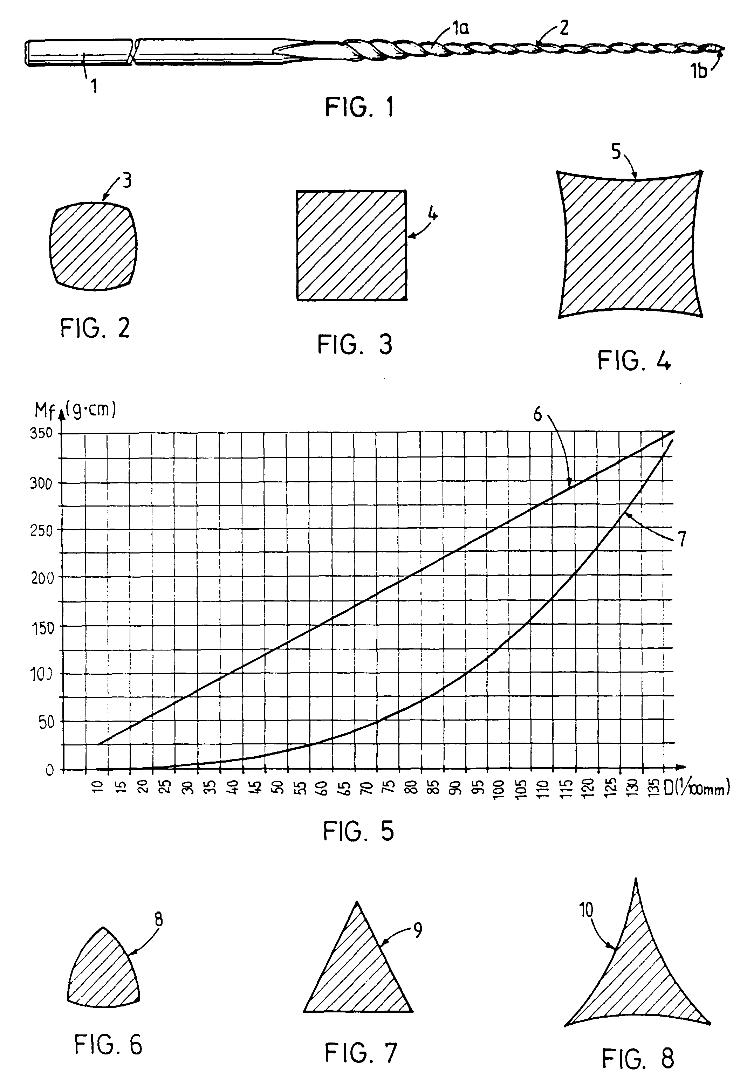

L'instrument représenté à la fig. 1 appartient à un jeu d'instruments, qui pourra en comporter jusqu'à près d'une trentaine, de diamètres différents. Cet instrument comprend une tige cylindrique 1 destinée à s'engager soit dans un manche permettant l'actionnement manuel de l'instrument, soit dans un manche s'engageant lui-même dans une pièce à main assurant l'entraînement mécanique de l'instrument.

La tige 1 se prolonge par une partie effilée 1a, dans laquelle sont ménagées des lèvres de coupe 2, se terminant par une pointe conique 1b.

Cet instrument sera obtenu en partant d'une tige de section circulaire dont sera effilée, par usinage, la partie antérieure 1a, tout en y ménageant des faces, de telle manière que cette partie effilée ait une section droite polygonale. Cette tige sera ensuite soumise à une torsion réalisant les lèvres hélicoïdales 2. On pourrait aussi usiner les lèvres coupantes dans la tige effilée.

Le diamètre D de la tige à la naissance de sa pointe 1b constitue le diamètre nominal servant à caractériser l'instrument. C'est ce diamètre nominal, exprimé en centièmes de mm, qui est porté en abscisses au diagramme de la fig. 5.

Dans le cas du jeu d'instruments présentement décrit, la forme générale de la section droite des instruments du jeu est carrée.

Cependant, pour ce qui est des instruments de petit diamètre (fig. 2), les côtés 3 du carré de la section de l'instrument sont constitués par des arcs de cercle dont la convexité est tournée vers l'extérieur. Il en résulte que les faces de l'âme de l'instrument, avant sa torsion ou avant l'usinage de ses lèvres coupantes, sont convexes, ce qui a pour conséquence d'augmenter le moment de flexion M_{f} de ces instruments de petit diamètre.

Quant aux instruments de diamètre moyen du jeu, (fig. 3), les côtés 4 des carrés constituant la section de ces instruments sont rectilignes de sorte que les faces de l'âme de l'instrument, avant sa torsion ou avant l'usinage de ses lèvres coupantes, sont planes.

Enfin, pour ce qui est des instruments de gros diamètre du jeu (fig. 4), les côtés 5 des carrés constituant la section droite des instruments sont en arc de cercle, comme dans le cas de la fig. 2, mais, à l'inverse de ce cas là, ont leur convexité tournée vers l'intérieur. Il en résulte que les faces de l'âme de l'instrument, avant sa torsion ou son usinage, sont concaves, ce qui réduit le moment de flexion des tiges.

En choisissant judicieusement la convexité ou la concavité des faces latérales des âmes des instruments, en fonction de leur diamètre, on obtient que la variation des moments de flexion M_{f} des instruments du jeu soit linéaire, comme indiqué par la courbe 6 du diagramme de la fig. 5 où ces moments de flexion figurent en ordonnées, exprimés en g·cm. Les diamètres nominaux D des instruments du jeu, portés en abscisses, s'étagent de D₁₀ (10/100 de mm) à D₁₄₀ (140/100 de mm). Bien entendu, les chiffres indiqués dans ce diagramme, que ce soit pour les moments de flexion et pour les diamètres nominaux, ne sont qu'indicatifs, à titre d'exemple, mais pourront varier selon le type d'instruments et la matière dans laquelle ils sont réalisés, par exemple.

La courbe 7 figurant sur ce même diagramme indique la variation des moments de flexion d'un jeu ordinaire d'instruments dans lequel la section des instruments ne varie pas, dans sa forme, seule la "force" des instruments variant d'un instrument à l'autre. On voit que, dans ce cas, la courbe 7 est une exponentielle, la flexibilité des instruments du jeu étant constamment inférieure à la flexibilité optimum recherchée, indiquée par la courbe 6. Dans ce cas, si la flexibilité des instruments de petite taille était accrue, cela conduirait à une rigidité beaucoup trop élevée des instruments de grande taille.

Théoriquement, pour que la courbe 6 du diagramme de la fig. 5 soit parfaitement rectiligne, il ne devrait y avoir, dans le jeu, qu'un seul instrument dont les faces de l'âme, avant la torsion ou l'usinage, soient planes, selon la fig. 3, tous les autres instruments du jeu présentant des faces convexes (fig. 2) ou concaves (fig. 4), la convexité et la concavité étant différentes d'un instrument à l'autre.

Cependant, dans la pratique, il est prévu de réaliser plusieurs instruments se suivant dans le jeu présentant des faces qui soient planes, de même convexité ou de même concavité, du fait que la variation du moment de flexion d'un instrument à l'autre est relativement faible, comme le montre le diagramme de la fig. 5, dès lors que la variation des diamètres nominaux est faible également, de 5/100 de mm d'un instrument à l'autre.

La variante des figs. 6, 7 et 8 diffère de la première forme d'exécution par le fait que la section droite des instruments du jeu n'est pas de forme carrée mais de forme générale triangulaire.

Cependant, comme dans le cas de la première forme d'exécution, les côtés 8 des triangles représentant la section des instruments de petite taille sont en arcs de cercles, leur convexité étant tournée vers l'extérieur, les côtés 9 des triangles de taille moyenne sont rectilignes et les côtés 10 des instruments de grande taille sont des arcs de cercles dont la convexité est tournée vers l'intérieur, ceci afin que la variation des moments de flexion soit sensiblement linéaire.

La section de l'âme des instruments du jeu pourra être différente du cas du carré et du cas du triangle décrits et représentés, tout en restant polygonale.

## Revendications

1. Jeu d'instruments pour l'alésage des canaux radiculaires dentaires, de diamètres différents, comprenant chacun une tige conique présentant au moins une lèvre hélicoîdale coupante (2), caractérisé par le fait que la forme de la section de l'âme desdits instruments est différente d'un instrument à l'autre du jeu, pour au moins une partie desdits instruments, de façon que le moment de flexion varie, d'un instrument à l'autre, de manière sensiblement linéaire.

2. Jeu d'instruments suivant la revendication 1, caractérisé par le fait que la section de l'âme des instruments du jeu est constituée par un polygone dont les côtés sont convexes (3, 8) pour les instruments de petite section, rectilignes (4, 9) pour les instruments de section moyenne et concaves (10) pour les instruments de grosse section.

## Patentansprüche

1. Set von Instrumenten für die Aufweitung von Zahnwurzelkanälen mit verschiedenen Durchmessern, jedes einen kegelförmigen Schaft umfassend, der zumindest eine schraubenförmige Schneidlippe (2) aufweist, dadurch gekennzeichnet, dass sich die Form des Seelenquerschnitts der benannten Instrumente von einem Instrument des Sets zum nächsten für zumindest einen Teil der benannten Instrumente so ändert, dass sich das Biegungsmoment in im wesentlichen linearer Weise von einem Instrument zum nächsten ändert.

2. Instrumentenset nach Anspruch 1, dadurch gekennzeichnet, dass der Seelenquerschnitt der Instrumente des Sets aus einem Vieleck besteht, dessen Seiten für die Instrumente geringen Querschnitts konvex (3, 8), für die Instrumente mittleren Querschnitts geradlinig (4, 9) und für die Instrumente grossen Querschnitts konkav (10) sind.

## Claims

1. A set of instruments for reaming root canals of teeth, of various diameters, including each one a conical rod exhibiting at least one helicoidal cutting lip (2), characterised in that the shape of the section of the core of said instruments differs from one instrument of the set to the other, in at least one part of said instruments, so that the bending moment varies, from one instrument to the other, in a manner which is substantially linear.

2. A set of instruments according to claim 1, characterised in that the section of the core of the instruments of the set is shaped as a polygon of which the sides are convex (3, 8) in the case of the instruments with a small section, rectilinear (4, 9) in the case of the average-sized instruments and concave (10) in the case of the instruments with a large section.
